# EUROPEAN PATENT APPLICATION

(11) **EP 3 543 760 A1**
(43) Date of publication of application: **25.09.2019**
(21) Application number: 18163342.1
(22) Date of filing: 22.03.2018
(51) Int. Cl.: G02B 17/02, G02B 17/06

(54) **REFOCUSING DEVICE**

(71) Applicant: Nederlandse Organisatie voor toegepast- natuurwetenschappelijk onderzoek TNO, 2595 DA 's-Gravenhage (NL)
(72) Inventor: VAN DER VALK, Nicolaas Cornelis Johannes, 2595 DA 's-Gravenhage (NL)
(74) Representative: V.O.

(57) **Abstract**

A focusing device (1) comprises a base unit (12) and a mirror unit (11) which is translatable relative to the base unit parallel to an optical axis (A) of the focusing device. The mirror unit (11) is configured to receive incident light along the optical axis (A) in a first direction and to reflect the incident light parallel with the optical axis (A) in said first direction. The mirror unit (11) comprises at least four mirrors (21-24), at least one of the mirrors being curved.

## Description

The present invention relates to a refocusing device. More in particular, the present invention relates to a refocusing device which is particularly, but not exclusively, suitable for use in an interferometer, for example an interferometer for use in space applications.

Such refocusing devices are known per se. For example, a single lens, a single mirror or a double mirror may be used. However, it has been found that the known refocusing devices are not satisfactory for scientific observations. The use of a refocusing device in scientific observations puts strict requirements on the allowable impact on the focal path length. In this respect, it is desired to refocus during a scientific observation while minimizing the impact of the refocusing on the measurements.

Accordingly, the present invention provides a focusing device, comprising a base unit and a mirror unit, wherein the mirror unit is translatable relative to the base unit parallel to an optical axis of the focusing device, wherein the mirror unit is configured to receive incident light along the optical axis in a first direction and to reflect the incident light parallel with the optical axis in said first direction, wherein the mirror unit comprises an even number of mirrors, wherein at least one of the mirrors is curved, and wherein the number of mirrors is equal to at least four.

By providing an even number of mirrors which is equal to four or greater than four, instead of one or two mirrors, a refocusing device can be obtained which can be used during scientific observations. In particular, a refocusing device can be obtained which suffers less from straylight, which has a low sensitivity to parasitic movements and which does not have a central obscuration.

In the focusing device of the invention, the number of mirrors may be equal to four, but embodiments having six, eight or even more mirrors are also possible.

In the focusing device according to the present invention, the incident light may be received by a first mirror and be reflected to a second mirror, while the second mirror may reflect the light to a third mirror, which third mirror may reflect the light to a fourth mirror.

The first mirror and the second mirror may be parallel to each other. In addition, the third mirror and the fourth mirror may be parallel to each other. The first mirror and the fourth mirror may together define an angle of approximately 90°. This results in a very advantageous and compact geometry. Such a geometry allows the input and the output beam to be co-linear or overlapping.

The first mirror may be curved so as to provide optical power. In alternative embodiments, the second, third and/or fourth mirror may be curved. The curved mirror may be concave. Such a curvature and the resulting optical power may be small, for example in the order of F/50, although other optical powers, for example ranging from F/70 to F/30, may also be used.

The invention additionally provides an interferometer comprising a focusing device as described above.

The invention will further be explained with reference to the drawings, in which:
Figure 1 schematically shows an exemplary embodiment of a focusing device according to the invention.
Figure 2 schematically shows a support structure for use in the focusing device according to the invention.
Figure 3 schematically shows the support structure of Figure 2 provided with four mirrors according to the invention.
Figure 4 schematically shows a top view of the support structure of Figure 3 according to the invention.
Figure 5 schematically shows the arrangement of four mirrors according to the invention corresponding with Figure 1.
Figure 6 schematically shows an arrangement of six mirrors according to the invention.

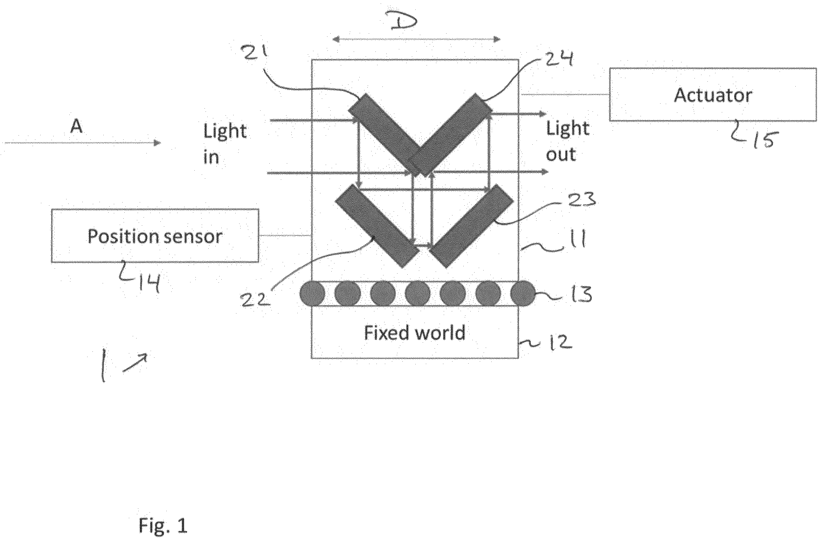

The exemplary focusing device 1 schematically illustrated in Figure 1 is shown to comprise a base unit 12 and a mirror unit 11. The mirror unit 11 is translatable relative to the base unit 12 and may be coupled to the base unit 12 by a roller ball mechanism or a similar mechanism allowing a linear movement. The translation is parallel to the optical axis A of the focusing device.

The focusing device 1 of Figure 1 is shown to further comprise a position sensor 14 for sensing the position of the mirror unit 11 relative to the base unit 12, which represents the "fixed world". In addition, the embodiment of Figure 1 comprises an actuator 15 for causing a movement of the mirror unit 11, in the direction of the arrow D, so as to cause a refocusing of the incident light. As can be seen, the translational movement represented by the arrow D and the optical axis represented by the axis A are substantially parallel and may coincide.

The mirror unit 11 is configured to receive incident light along the optical axis A in direction of incidence and to reflect the incident light, parallel with the optical axis A, in the same direction. In preferred embodiments of the invention, therefore, the light entering the mirror unit 11 and the light exiting the mirror unit 11 share a common axis or have at least parallel axes, while light entering the mirror unit 11 and the light exiting the mirror unit 11 enclose an angle equal to 0.

In accordance with the invention, the mirror unit 11 of Figure 1 comprises four mirrors 21, 22, 23 and 24. In a preferred embodiment, at least one of the mirrors is curved, preferably mirror 21. If no curved mirror is provided, the focusing device should comprise a lens to achieve the same focusing effect.

The incident light, which can be coincidental with the optical axis A, is received by the first mirror 21 and reflected to the second mirror 22. The second mirror 22 reflects the light to the third mirror 23. In turn, the third mirror 23 reflects the light to the fourth mirror 24. It can be seen that the light reflected by the fourth mirror 24 and output by the mirror unit 11 is at least parallel with the optical axis A, while this light may be coincidental with the optical axis A. Although configurations are possible in which the light output by the mirror unit 11 is not parallel with the optical axis A, any deviation from parallelism or from coincidence with the optical axis A can cause an increased sensitivity to parasitic motion.

As illustrated in Figure 1, in the embodiment shown the first mirror 21 and the second mirror 22 are substantially parallel to each other. Similarly, the third mirror 23 and the fourth mirror 24 are parallel to each other. The first mirror 21 and the fourth mirror 24 together define an angle of approximately 90°.

At least one of the mirrors, for example the first mirror 21, may be curved and may for example be concave, so as to provide optical power. The curved mirror may have an optical power between F/30 and F/70, for example approximately F/50, although another optical power may also be used. A small curvature results in a high sensitivity to translation of the mirror unit 11 and a low sensitivity to parasitic motion.

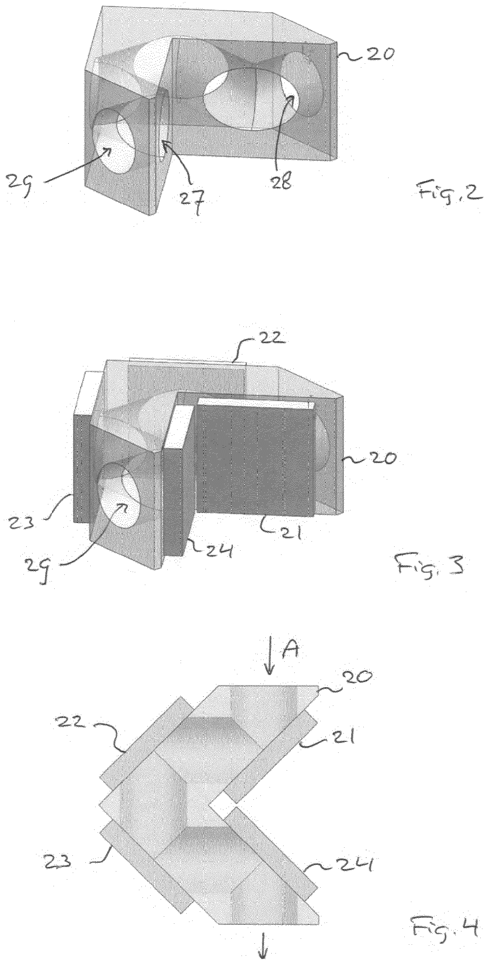

The support structure 20 shown in Figure 2 is at least partially hollow and is provided with several openings for letting light pass, for example the opening 28 through which reflected light enters the structure and the opening 29 through which reflected light exits the structure. In the embodiment shown, the support structure is hollow and provided with six openings. In addition to the light input and light output openings 28 and 29, the support structure shown is provided with an opening (e.g. 27) facing each mirror, as will be clear when comparing Figure 2 and Figure 3.

In the exemplary embodiment of Figure 3, the support structure 20 is shown to be provided with four mirrors 21-24, thus forming the main part of the mirror unit 11 shown in Fig. 1. It is clear from Figure 3 that each of the mirrors 21-24 faces an opening in the support structure, each opening providing a passage to the hollow interior of the support structure 20. It will be understood that when more than four mirrors are used, more openings in the support structure 20 will be provided. A mirror unit having six mirrors may comprise a support structure having eight openings, for example.

Figure 4 shows the structure 20, together with the four mirrors 21-24, in top view. It is noted that instead of a hollow support structure 25, an at least partially transparent support structure 20 may be provided. In some embodiments, the support structure 20 may be both at least partially transparent and be at least partially hollow.

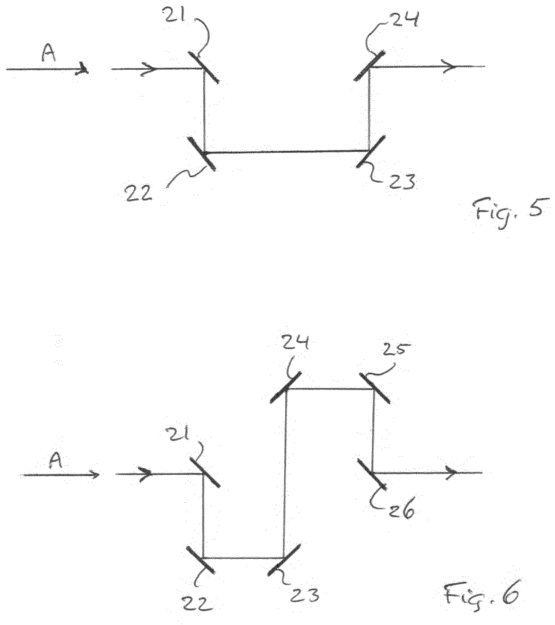

In Figure 5, the configuration of mirrors shown in Figure 1 and Figure 4 is schematically illustrated. This configuration includes four mirrors 21-24. In contrast, the alternative configuration of mirrors schematically shown in Fig. 6 includes six mirrors 21-26. As can be seen, in the configuration of Figure 6 the mirrors are also arranged in such a way that the light incident on the first mirror 21 and the light reflected by the sixth mirror 26 are substantially coincident with or at least both parallel to the optical axis A. In the configuration of Fig. 6, at least one of the mirrors 21-26 may be curved to provide optical power, thus eliminating the need for a lens. Although mirror 21 may be curved, one of the other mirrors may be curved instead or as well, for example mirror 26.

In summary, the device according to the invention has a focusing capability and is therefore capable of adjusting a (spherical) wave front error (WFE). That is, a focusing error can be compensated. This focusing capability may be achieved by providing at least one of the mirrors with a curvature, for example a concave curvature. Such a curvature and the resulting optical strength may be small, for example in the order of F/50. Instead of a mirror having a curvature, a lens may be provided.

The invention makes use of an assembly of an even number of mirrors, for example four mirrors, such that the input and output beam may be co-aligned both in beam direction and beam location. At least one of the four mirrors may have a (preferably slight) curvature, so that a lateral shift of the four-mirror assembly can be used to control focus. This configuration is such that shifts and rotations of the mirror assembly (at least in a first approximation) do not affect the optical path length.

The main part of the refocusing device is a mirror assembly consisting of four mirrors. This mirror assembly can be shifted along a ID mechanical guidance by an actuator (15 in Figure 1). An additional position sensor (14 in Figure 1) allows active position control.

The focusing device of the invention may be used for the active control of the focus error inside a interferometer, allowing the optical path length to remain stable within about 1 pm/sqrt(Hz). An interferometer provided with the focusing device of the invention may advantageously be used in space application, for example in satellites.

It will be understood by those skilled in the art that the invention is not limited to the embodiments described above and that many modification and additions may be made without departing from the scope of the appending claims.

## Claims

1. Focusing device (1), comprising a base unit (12) and a mirror unit (11), wherein the mirror unit is translatable relative to the base unit parallel to an optical axis (A) of the focusing device, wherein the mirror unit (11) is configured to receive incident light along the optical axis (A) in a first direction and to reflect the incident light parallel with the optical axis (A) in said first direction, wherein the mirror unit (11) comprises an even number of mirrors (21-24), wherein at least one of the mirrors is curved, and wherein the number of mirrors is equal to at least four.

2. Focusing device according to claim 1, wherein the number of mirrors (21-24) equals four.

3. Focusing device according to claim 1 or 2, wherein the mirrors are arranged such that the incident light is received by a first mirror (21) and reflected to a second mirror (22), which second mirror reflects the light to a third mirror (23), and which third mirror reflects the light to a fourth mirror (24).

4. Focusing device according to claim 3, wherein the first mirror (21) and the second mirror (22) are parallel to each other, and wherein the third mirror (23) and the fourth mirror (24) are parallel to each other.

5. Focusing device according to claim 3 or 4, wherein the first mirror (21) and the fourth mirror (24) together define an angle of approximately 90°.

6. Focusing device according to any of claims 3 to 5, wherein the first mirror (21) is curved so as to provide optical power.

7. Focusing device according to claim 6, wherein the first mirror (21) is concave.

8. Focusing device according to claim 7, wherein the first mirror (21) has an optical power between F/30 and F/70, preferably approximately F/50.

9. Focusing device according to any of the preceding claims, wherein the mirrors (21-24) are mounted on a single hollow support structure (25).

10. Focusing device according to any of the preceding claims, further comprising an actuator (15) for translating the mirror unit (11) relative to the base unit (12).

11. Focusing device according to any of the preceding claims, further comprising a position sensor (14) for sensing the position of the mirror unit (11) relative to the base unit (12).

12. Interferometer comprising a focusing device (1) according to any of the preceding claims.
